# EUROPÄISCHE PATENTSCHRIFT

(11) **EP 0 897 442 B1**
(45) Veröffentlichungstag und Bekanntmachung des Hinweises auf die Patenterteilung: **01.03.2000**
(21) Anmeldenummer: 97923004.2
(22) Anmeldetag: 07.05.1997
(51) Int. Cl.: E04G 21/04

(54) **VORRICHTUNG ZUM AUSBRINGEN VON BETON**
DEVICE FOR POURING OUT CONCRETE
INSTALLATION POUR LA DISTRIBUTION DE BETON

(30) Priorität: 07.05.1996 DE 19618316
(43) Veröffentlichungstag der Anmeldung: 24.02.1999
(73) Patentinhaber: Hudelmaier, Ulrike, 89073 Ulm (DE); Hudelmaier, Jörg, D-89075 Ulm (DE); Hudelmaier, Götz, D-89075 Ulm (DE)
(72) Erfinder: HUDELMAIER, Gerhard, D-89075 Ulm (DE)
(74) Vertreter: Grünecker, Kinkeldey, Stockmair & Schwanhäusser Anwaltssozietät
(86) Internationale Anmeldenummer: EP9702340
(87) Internationale Veröffentlichungsnummer: WO9742382

(56) Entgegenhaltungen:
- EP-A- 0 066 724
- BE-A- 565 280
- DE-A- 3 909 212
- US-A- 3 860 175
- US-A- 3 949 850
- PATENT ABSTRACTS OF JAPAN vol. 10, no. 94 (C-338) [2151] , 11.April 1986 & JP 60 225663 A (SUGIUE ENGENEERING), 9.November 1985,

## Beschreibung

Die Erfindung bezieht sich auf eine Vorrichtung zum Ausbringen von Beton, mit einem an eine Betonzuführleitung vorzugsweise einer Betonpumpe anschließenden, flexiblen Schlauch, der ein der Zuführleitung zugeordnetes Eintrittsende, durch welches der durch die Zuführleitung geförderte Beton in den Schlauch eintritt und ein Austrittsende aufweist, durch welches der durch den Schlauch geförderte Beton zum Zwecke des Ausbringens aus dem Schlauch austritt und der Schlauch in zumindest einer Schwenkebene biegsam ist, zwischen einer im wesentlichen geraden Ausgangsstellung und einer gekrümmten Stellung, und mit einer Schwenkeinrichtung zum Überführen des Schlauches von seiner geraden Ausgangsstellung in seine gekrümmte Stellung, wobei die Schwenkeinrichtung zumindest ein in der Schwenkebene wirkendes Zug- und/oder Druckmittel aufweist, welches zumindest in der Ausgangsstellung des Schlauches außerhalb der Längsmittenachse des Schlauches und zumindest mittelbar zwischen einer dem Austrittsende des Schlauches zugeordneten, mit dem Schlauch fest verbundenen ersten Lagerstelle und einer dem einen Ende zugeordneten, gegenüber dem Eintrittsende wenigstens in Zug- bzw. Druckrichtung des Zug- und/oder Druckmittels festgelegten zweiten Lagerstelle verläuft und wenigstens eine eine Zug- bzw. Druckkraft auf das Zug- und/oder Druckmittel aufbringende Betätigungseinrichtung vorgesehen ist, die mit dem Zug- und/oder Druckmittel wirkverbunden ist, derart, daß jeweils durch eine Betätigung der Betätigungseinrichtung der Abstand zwischen erster und zweiter Lagerstelle verkürzbar ist, wobei der Schlauch von seiner Ausgangsstellung in seine gekrümmte Stellung überführbar ist.

Eine derartige Vorrichtung ist zum Beispiel aus der DE-A-2752605 bekannt. Diese Vorrichtung weist eine Kolbenzylindereinheit auf, durch welche der Schlauch von seiner Ausgangsstellung in seine gekrümmte Stellung überführbar ist. Dadurch, daß das Austrittsende gegenüber dem Eintrittsende verschwenkt werden kann, so daß der Beton gezielt ausgebracht werden kann, ohne die Betonzuführleitung selbst zu bewegen. Als nachteilig erweist es sich bei einer derartigen Vorrichtung jedoch, daß der mögliche Schwenkwinkel konstruktionsbedingt stark eingeschränkt ist. Der Schwenkwinkel wird begrenzt durch den Abstand der Kolbenstange, bzw. der Kolben-Zylindereinheit vom Schlauch. Zum Vergrößern des Schwenkwinkels muß die Kolben-Zylindereinheit weiter vom Schlauch beabstandet werden. Dadurch vergrößert sich jedoch das Bauvolumen erheblich. Auch werden dadurch mehr Bauteile benötigt, so daß die Vorrichtung schwerer wird, was insbesondere bei weit auskragenden Tragarmen von Nachteil ist. Darüber hinaus wird eine solche Vorrichtung nicht allen Anforderungen beim Betrieb einer Betonpumpe gerecht.

Aufgabe der Erfindung ist es daher, eine Vorrichtung der eingangs genannten Art derart weiter zu entwickeln, daß sie einfach herzustellen ist und ein möglichst geringes Gewicht und möglichst geringes Bauvolumen aufweist und einen möglichst großen effektiven Schwenkwinkel des Austrittsendes des Schlauches ermöglicht. Darüber hinaus soll sie universeller einsetzbar sein.

Die Aufgabe wird erfindungsgemäß dadurch gelöst, daß der Schlauch zumindest in zwei in einem Winkel zueinander angeordneten Schwenkebenen biegsam ist und zumindest zwei jeweils in den Schwenkebenen wirkende, flexible Zug- und/oder Druckmittel vorgesehen sind, wobei die Zug- und /oder Druckmittel flexibel sind.

Diese Lösung ist einfach und hat den Vorteil, daß die Vorrichtung derart gestalten läßt, daß sie ein vergleichsweise geringes Gewicht aufweist. Darüber hinaus ist die Zahl der benötigten Komponenten gegenüber herkömmlichen Lösungen verringert, wodurch sich die Herstellung der Vorrichtung vereinfacht. Zudem läßt sich die Vorrichtung nunmehr äußerst kompakt gestalten und lassen sich gegenüber herkömmlichen Lösungen größere Schwenkwinkel des Austrittsendes erzielen. Ferner läßt sich die Betonpumpe durch die Möglichkeit des Verschwenkens des Schlauchendes in zumindest zwei Schwenkebenen universeller einsetzen.

Als vorteilhaft kann es sich dabei erweisen, wenn die Schenkebenen einen rechten Winkel einschließen.

In vorteilhafter Weise können zumindest eine der ersten oder zweiten Lagerstellen auf Abstand zum jeweils zugeordneten Eintrittsende bzw. Austrittsende angeordnet sein. Dadurch lassen sich unterschiedliche Krümmungen des Schlauches bewirken, z.B. eine S-förmige Krümmung.

In einer vorteilhaften Weiterbildung der Erfindung kann jeweils die Betätigungseinrichtung zwischen einer der Lagerstellen und dem Zug- und/oder Druckmittel vorgesehen sein. Dadurch läßt sich die Vorrichtung noch kompakter ausbilden.

Als vorteilhaft kann es sich dabei erweisen, wenn jeweils die Betätigungseinrichtung zwischen der zweiten Lagerstelle und dem Zug- oder Druckmittel vorgesehen ist.

Um eine möglichst einfache und zuverlässige Konstruktion zu erhalten, kann es sich als vorteilhaft erweisen, wenn jeweils die Betätigungseinrichtung als Kolben-Zylindereinheit ausgeführt ist.

In einer vorteilhaften Weiterbildung der Erfindung, kann jeweils auch die zweite Lagerstelle mit dem Schlauch verbunden sein. Dadurch ist es möglich, die Vorrichtung unabhängig von der Zuführleitung anzubringen, bzw. anstelle eines Schlauches, welcher nicht über eine erfindungsgemäße Vorrichtung verfügt, anzubringen. Dadurch wird ein Nachrüsten alter Betonpumpen möglich.

Auch kann es sich als vorteilhaft erweisen, jeweils die Betätigungseinrichtung am Schlauch zu befestigen und mit einer der Lagerstellen des Zug- und/oder Druckmittels zu verbinden. Dies kann insbesondere beim Nachrüsten alter Betonpumpen von Vorteil sein, da es abhängig von den räumlichen Gegebenheiten möglich ist, die Betätigungseinrichtung entweder an der ersten oder zweiten Lagerstelle vorzusehen.

In einer vorteilhaften Weiterbildung der Erfindung, kann es günstig sein, wenn das Zug- und/oder Druckmittel jeweils in der Ausgangsstellung des Schlauches parallel zur Längsachse des Schlauches verläuft. Dabei kann es sich zudem als günstig erweisen, wenn jeweils die erste Lagerstelle seitlich zur Längsachse des Schlauches beabstandet angeordnet ist. Ebenso kann es vorteilhaft sein, wenn jeweils die zweite Lagerstelle seitlich zur Längsachse des Schlauches beabstandet angeordnet ist.

In einer vorteilhaften Weiterbildung der Erfindung kann es sich als vorteilhaft erweisen, wenn weitere Zug- und/oder Druckmittel vorgesehen sind, wobei die Lagerstellen jeweils am Umfang des Schlauches verteilt angeordnet sind. Dadurch läßt sich der Schlauch in unterschiedliche Richtungen biegen, wodurch eine bessere Verteilung des ausgebrachten Betons möglich wird.

Es kann sich dabei insbesondere als günstig erweisen, wenn jeweils zumindest zwei Zug- und/oder Druckmittel vorgesehen sind, die zumindest in der Ausgangsstellung des Schlauches einander gegenüberliegend zur Längsachse des Schlauches angeordnet sind. Dadurch lassen sich in einer Ebene Schwenkwinkel von 180° oder mehr erreichen.

In einer vorteilhaften Weiterbildung der Erfindung können drei Zug- oder Druckmittel vorgesehen sein, die in der Ausgangsstellung des Schlauches gleichmäßig um die Längsachse des Schlauches verteilt angeordnet sind und der Schlauch in mehreren Schwenkebenen schwenkbar ist. Dadurch kann die Vorrichtung noch universeller eingesetzt werden.

In einer weiteren vorteilhaften Ausgestaltung der Erfindung können vier Zug- und/oder Druckmittel in der Ausgangsstellung gleichmäßig um die Längsachse des Schlauches verteilt angeordnet sein, wobei die Zug- und/oder Druckmittel paarweise im wesentlichen in den Schwenkebenen angeordnet sind. Auch dadurch läßt sich eine bessere Verteilung des durch den Schlauch ausgebrachten Betons erzielen.

Um die Vorrichtung möglichst kompakt und konstruktiv einfach zu gestalten, können die ersten Lagerstellen jeweils an einem ersten Befestigungsring angebracht sein, der den Schlauch umgibt und an diesem befestigt ist, wobei die Zug- und/oder Druckmittel jeweils in den Lagerstellen festgelegt sind. In diesem Zusammenhang kann es zudem günstig sein, wenn die zweiten Lagerstellen jeweils an einem zweiten Befestigungsring angebracht sind, der gegenüber dem Schlauch festgelegt ist und die Betätigungseinrichtungen sich an dem zweiten Befestigungsring abstützen.

Zudem kann es sich als vorteilhaft erweisen, wenn der zweite Befestigungsring Führungen aufweist, in denen die Zug- und/oder Druckmittel gegenüber dem Befestigungsring beweglich geführt sind. Auf diese Weise läßt sich eine genaue Führung der Zug- und/oder Druckmittel verwirklichen.

Vorteilhafterweise kann dabei die Führung durch Rollen erfolgen, wobei die Zug- und/oder Druckmittel abschnittsweise parallel zur Zug- bzw. Druckrichtung der Kolben-Zylindereinheit durch die Rollen umgelenkt sind. Dadurch läßt sich ein Klemmen der Zug- und/oder Druckmittel in den Führungen verhindern.

In einer vorteilhaften Weiterbildung der Erfindung kann die Vorrichtung ein Rotationsgelenk aufweisen, durch welches der Schlauch gegenüber der Zuleitung um seiner Symmetrieachse schwenkbar ist. Dadurch läßt sich das Austrittsende im ausgelenkten Zustand des Schlauches auf einer Kreisbahn um bis zu 360° schwenken. Auf diese Weise läßt sich das Verteilen des auszubringenden Betons nochmals verbessern.

In einer weiteren Fortbildung der Erfindung können die Zug- und/oder Druckmittel in der Wandung des Schlauches geführt sein. Dadurch läßt sich die Vorrichtung nochmals kompakter gestalten. Zudem wird eine Verschmutzung der Schwenkeinrichtung verhindert.

Von Vorteil kann es zudem sein, wenn die Zug- und/oder Druckmittel als Zugkräfte übertragende Stahlseile, ausgebildet sind. Ferner kann es sich als vorteilhaft erweisen, wenn die Zug- und/oder Druckmittel als Zug- und Druckkräfte übertragende Gelenkstangen, vorzugsweise Kardangelenke ausgebildet sind.

Nachfolgend wird die Erfindung anhand von Ausführungsbeispielen näher erläutert.

Es zeigen:
- Fig. 1: eine erste Ausführungsform der erfindungsgemäßen Vorrichtung in einer Ausgangsstellung in einer teilweisen Schnittansicht,
- Fig. 2: Vorrichtung aus Fig. 1 im ausgelenkten Zustand,
- Fig. 3: eine zweite Ausführungsform der erfindungsgemäßen Vorrichtung im unausgelenkten Zustand in einer teilweisen Schnittansicht,

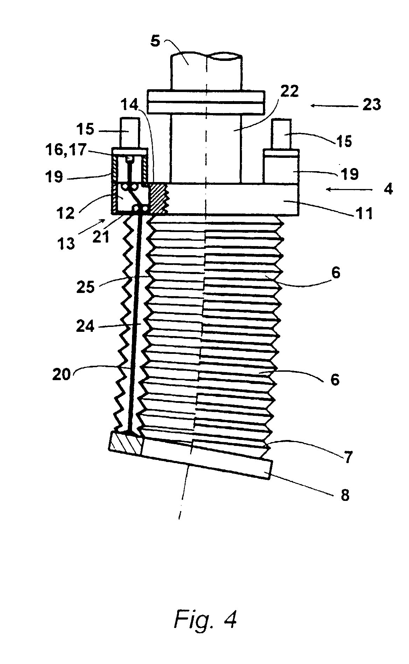

- Fig. 4: Vorrichtung aus Fig. 3 im ausgelenkten Zustand,
- Fig. 5: eine dritte Ausführungsform der erfindungsgemäßen Vorrichtung im unausgelenkten Zustand in einer teilweise geschnittenen Ansicht.
- Fig. 6: die Vorrichtung aus Fig. 5 im ausgelenkten Zustand.

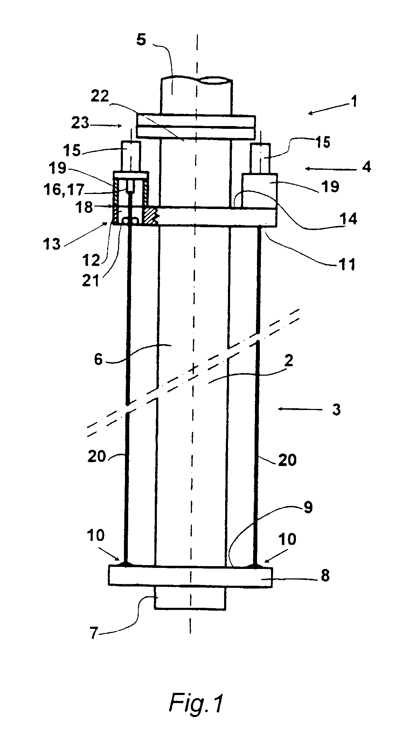

Fig. 1 zeigt eine erste Ausführungsform der erfindungsgemäßen Vorrichtung 1 mit Schlauch 2, Schwenkeinrichtung 3 und Betätigungseinrichtungen 4.

Die Vorrichtung 1 ist dafür vorgesehen, an das Ende einer abschnittsweise dargestellten Betonzuführleitung 5 einer nicht dargestellten Betonpumpe angebracht zu werden. Die Betonzuführleitung 5 einer Betonpumpe ist normalerweise an einem nicht dargestellten Tragarm gehalten. Somit ist es auch denkbar, die Vorrichtung 1 an diesem Tragarm zu befestigen.

Der Schlauch 2 der Vorrichtung 1 ist flexibel und verfügt über ein der Zuführleitung 5 zugeordnetes Eintrittsende 6, durch welches der durch die Zuführleitung 5 geförderte Beton in den Schlauch 2 eintritt, sowie über ein dem Eintrittsende 6 gegenüberliegendes Austrittsendes 7, durch welches der durch den Schlauch 2 geförderte Beton zum Zwecke des Ausbringens aus dem Schlauch 2 austritt. Um die notwendige Flexibilität des Schlauches 2 zu gewährleisten, kann dieser aus gummielastischem Material, textilartigen Materialien, Metallgeflechten oder Kunststoff bestehen. Ebenso ist es denkbar, den Schlauch 2 segmentartig aufzubauen, wobei die einzelnen Segmente z.B. aus Metall oder Kunststoff bestehen können. Grundsätzlich eignet sich jedes Material, das es erlaubt, den Schlauch flexibel zu gestalten. Im Querschnitt ist der Schlauch 2 vorzugsweise ringförmig.

Am Austrittsende 7 ist ein erster Befestigungsring 8 vorgesehen, welcher mit dem Schlauch 2 verbunden ist. Auf der dem Eintrittsende 6 zugewandten Seite 9 befinden sich zwei erste Lagerstellen 10. Die ersten Lagerstellen 10 sind seitlich zur Symmetrieachse des in einer Ausgangsstellung im wesentlichen rohrförmigen Schlauches 2 angeordnet. Beide ersten Lagerstellen 10 sind einander zur Symmetrieachse des Schlauches 2 gegenüberliegend angeordnet von der Symmetrieachse beabstandet.

Dem Eintrittsende 6 ist ein zweiter Befestigungsring 11 zugeordnet, welcher über zwei Durchbrüche 12 verfügt. Die Durchbrüche 12 sind jeweils Teile einer Führung 13. Auf der der Zuführleitung 5 zugeordneten Seite 14 befinden sich zwei jeweils den Durchbrüchen 12 zugeordnete Kolben-Zylindereinheiten 15 mit Zugstangen 16, die dem Austrittsende 7 zugewandte Endabschnitte 17 aufweisen. Die Kolben-Zylindereinheiten 15 stützen sich über zweite Lagerstellen 13 bildende Hülsen 19 am zweiten Befestigungsring 11 ab. Der zweite Befestigungsring 11 und die Hülse 19 bzw. Kolben-Zylindereinheiten 15 sind jeweils über nicht dargestellte Schraubverbindungen miteinander verbunden.

Zwischen den ersten Lagerstellen 10 und den zweiten Lagerstellen 18 sind jeweils Zugmittel 20 in Form von Stahlseilen vorgesehen. Ein Ende der Zugmittel ist direkt mit den ersten Lagerstellen verbunden, das andere Ende ist mittelbar über die Endabschnitte 17 in der Kolbenstangen 16 der Kolben-Zylindereinheit mit den Lagerstellen 18 verbunden. Die Zugmittel 20 sind vorzugsweise aus Stahlseilen gefertigt. Ebenso ist es jedoch denkbar, geflochtenes Seilwerk, Kunststoffzüge oder Ketten zu verwenden. Ferner können die Zugmittel in der Art von Bowdenzügen ausgebildet sein. Alternativ ist es denkbar, Schubglieder oder gelenkig miteinander verbundene Druckstangen zu verwenden.

Beide Zugmittel 20 sind jeweils durch die Durchbrüche 12 geführt, wobei in den Durchbrüchen 12 jeweils paarweise die Rollen 21 vorgesehen sind, die die Zugmittel 20 in jeder Stellung des Schlauches 2 derart umlenken, daß das der Zugstange 16 zugewandte Ende jeweils mit der Zugstange 16 fluchtet. Auf diese Weise wird die Einleitung von Querkräften auf die Kolben-Zylindereinheiten 15 verhindert.

Der zweite Befestigungsring 11 ist mit einem Zwischenstück 22 fest verbunden, welches Teil der Betonzuführleitung 5 ist. Das Zwischenstück 22 ist durch eine Rotationseinrichtung 23 flanschartig mit der übrigen Betonzuführleitung 5 verbunden, derart, daß das Zwischenstück 22 mit dem zweiten Befestigungsring 11 und Schlauch 2 um die Längsachse des Zwischenstückes 22 drehbar ist. Der Drehantrieb erfolgt hydraulisch und ist nicht näher dargestellt.

Der Antrieb der Kolben-Zylindereinheiten 15 erfolgt ebenfalls hydraulisch und ist nicht näher dargestellt. Die Befestigung der Züge 20 an den ersten Lagerstellen 10, bzw. an den Endabschnitten 17 erfolgt in für den Fachmann üblicher Weise z.B. durch Schraubklemmen oder Haken und Ösen, und ist der Übersichtlichkeit halber jedoch nicht näher dargestellt.

Der Schlauch 2 fluchtet mit den Zwischenstücken 22 bzw. dem an das Zwischenstück 22 anschließenden Teil der Betonzuführleitung 5. Die Verbindung zwischen Zwischenstück 22 und Schlauch 2 ist durch den zweiten Befestigungsring 11 abgedeckt. Der Schlauch 2 kann z. B. ebenfalls mit dem zweiten Befestigungsring 11 verbunden sein.

Nachfolgend wird die Wirkungs- und Funktionsweise der Erfindung näher erläutert.

Durch eine nicht dargestellte Betonpumpe wird Beton durch die Betonzuführleitung 5, das Zwischenstück 22 und den Schlauch 2 gepumpt, wobei der Beton am Austrittsende 7 des Schlauches 2 austritt.

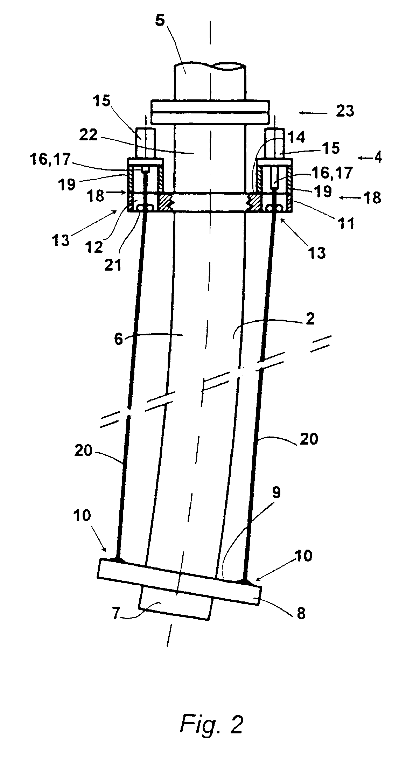

In einer Ausgangsstellung ist der Schlauch 2 im wesentlichen rohrförmig und fluchtet mit dem Zwischenstück 22 bzw. zumindest abschnittsweise mit der Betonzuführleitung 5. Soll nun der durch das Austrittsende 7 austretende Beton gleichmäßig auf einer Fläche verteilt werden, so kann durch Betätigen der Zugmittel 20 der Schlauch 2 von seiner Ausgangsstellung in eine gekrümmte Stellung, wie aus Fig. 2 ersichtlich, überführt werden. In dieser gekrümmten Stellung wird der Beton in einen, gegenüber der Ausgangsstellung des Schlauches 2, anderen Bereich ausgegeben. Ebenso, wie die in Fig. 2 dargestellte Stellung, kann der Schlauch 2 auch jede beliebige Zwischenstellung einnehmen.

Um den Schlauch 2 von seiner Ausgangsstellung in die gekrümmte Stellung zu überführen, wird die Zugstange 16 einer der Kolben-Zylindereinheiten 15 zurückgezogen, wodurch der Abstand zwischen der ersten Lagerstelle 10 und der zweiten Lagerstelle 18 verkürzt wird, bzw. wird eines der Zugmittel 20 in Richtung zum zweiten Befestigungsring zurückgezogen, wobei eine Krümmung des Schlauches 2 ausgeführt wird. Entsprechend wird die Zugstange 16 der anderen Kolben-Zylindereinheit weiter ausgefahren, damit ein Krümmen des Schlauches 2 nicht behindert wird.

Je nach Hublängen der Zugstangen 16 kann das Austrittsende 7 des Schlauches 2 einen Schwenkwinkel von ca. 180° oder mehr überstreichen, sofern ein Schwenken zu beiden Seiten der Symmetrieachse des Schlauches 2 erfolgt.

Um eine noch bessere Verteilung des ausgebrachten Betons zu ermöglichen, läßt sich das Austrittsende 7 durch die Rotationseinrichtung 23 im ausgelenkten Zustand des Schlauches 2 auf einer Kreisbahn bewegen.

Die erfindungsgemäße Vorrichtung ist gegenüber herkömmlichen Lösungen einfach herzustellen, verfügt über ein geringes Gewicht und benötigt nur wenig Bauraum.

Durch Anbringen, z.B. eines Flansches an der Rotationseinrichtung 23, ist es denkbar, die Vorrichtung 1 auch an bereits bestehenden Betonpumpen nachzurüsten.

Nachfolgend wird eine zweite Ausführungsform anhand eines Ausführungsbeispiels beschrieben.

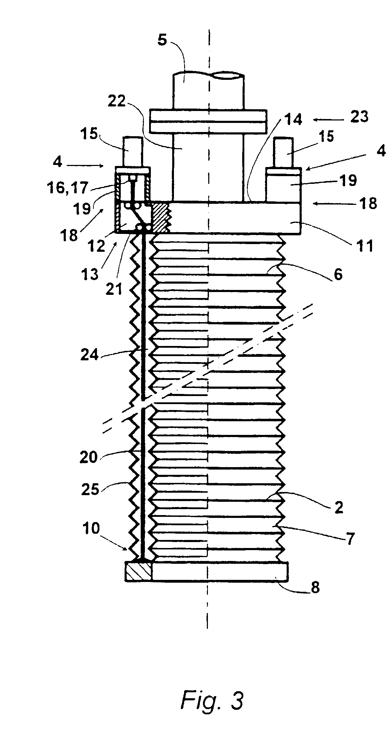

Die zweite Ausführungsform entspricht im wesentlichen der Vorrichtung der ersten Ausführungsform, jedoch sind die Zugmittel 20 in Kanälen 24 in der Wandung 25 des Schlauches 2 geführt. Zusätzlich ist ein zweites Paar Rollen 21 vorgesehen, um die Züge 20 entsprechend umzulenken, wie dies aus Fig. 3 ersichtlich ist. Damit der Schlauch 2 flexibler ist, ist er faltenbalgartig ausgeführt. Im vorliegenden Beispiel sind die Kanäle 24 durch zwei ineinandergesetzte Faltenbälge erzeugt, deren Wandungen 25 den Kanal 24 bilden.

Die Wirkungs- und Funktionsweisen der zweiten Ausführungsform der vorliegenden Erfindung entspricht der Wirkungs- und Funktionsweise der ersten Ausführungsform der vorliegenden Erfindung.

Alternativ ist es denkbar, zusätzliche Züge vorzusehen, mit denen es möglich ist, den Schlauch in mehreren Ebenen auszulenken.

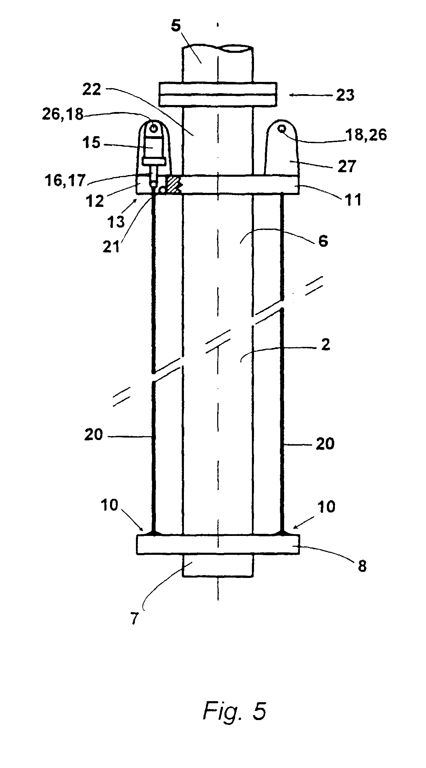

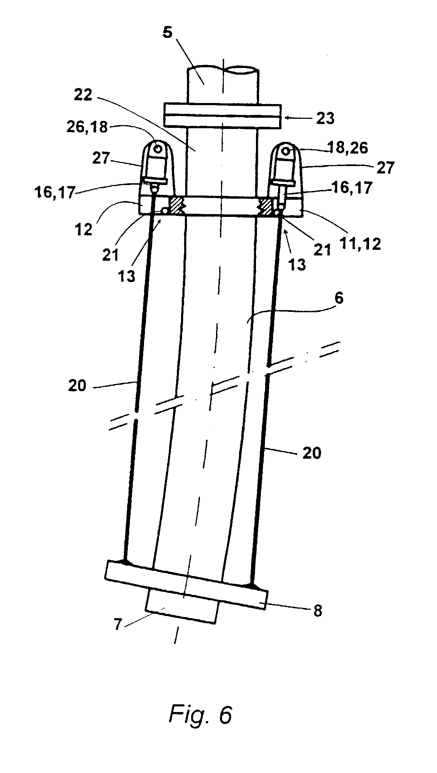

In den Fig. 5 und 6 ist noch eine weitere Ausführungsform dargestellt, die im wesentlichen der ersten Ausführungsform entspricht. Daher sind gleiche Bauteile mit gleichen Bezugszeichen versehen. Im Unterschied zur ersten Ausführungsform sind die Kolben-Zylindereinheiten 15 an Schwenkachsen 26 schwenkbar gelagert, die gleichzeitig die zweiten Lagerstellen 18 bilden. Die Schwenkachsen 25 sind in Stützlagersockeln 27 gelagert, die am zweiten Befestigungsring 11 befestigt sind.

Die Wirkungs- und Funktionsweise dieser dritten Ausführungsform entspricht im wesentlichen der ersten Ausführungsform der Erfindung. Aufgrund der Möglichkeit, die Kolben-Zylindereinheit zu schwenken, vereinfacht sich die Führung der Zugmittel 20.

## Patentansprüche

1. Vorrichtung zum Ausbringen von Beton, mit einem an eine Betonzuführleitung (5) vorzugsweise einer Betonpumpe anschließenden flexiblen Schlauch (2), der ein der Zuführleitung (5) zugeordnetes Eintrittsende (6), durch welches der durch die Betonzuführleitung (5) geförderte Beton in den Schlauch (2) eintritt und ein Austrittsende (7) aufweist, durch welches der durch den Schlauch (2) geförderte Beton zum Zwecke des Ausbringens aus dem Schlauch (2) austritt, wobei der Schlauch in zumindest einer Schwenkebene biegsam ist zwischen einer im wesentlichen geraden Ausgangsstellung und einer gekrümmten Stellung, und mit einer Schwenkeinrichtung (3) zum Überführen des Schlauches (2) von seiner geraden Ausgangsstellung in seine gekrümmte Stellung, wobei die Schwenkeinrichtung zumindest ein in der Schwenkebene wirkendes Zug- und/oder Druckmittel (20) aufweist, welches zumindest in der Ausgangsstellung des Schlauches (2) außerhalb der Längsmittenachse des Schlauches (2) und zumindest mittelbar zwischen einer dem Austrittsende des Schlauches zugeordneten, mit dem Schlauch (2) fest verbundenen ersten Lagerstelle (10) und einer dem Eintrittsende zugeordneten, gegenüber dem Eintrittsende wenigstens in Zug- bzw. Druckrichtung des Zug- und/oder Druckmittels festgelegten zweiten Lagerstelle (18) verläuft und wenigstens eine eine Zug- bzw. Druckkraft auf das Zug- und/oder Druckmittel aufbringende Betätigungseinrichtung vorgesehen ist, die mit dem Zug- und/oder Druckmittel wirkverbunden ist, derart, daß jeweils durch ein Betätigen der Betätigungseinrichtung der Abstand zwischen erster und zweiter Lagerstelle (10,18) verkürzbar ist, wobei der Schlauch (2) von seiner Ausgangsstellung in seine gekrümmte Stellung überführbar ist, **dadurch gekennzeichnet,** daß der Schlauch zumindest in zwei in einem Winkel zueinander angeordneten Schwenkebenen biegsam ist und zumindest zwei jeweils in den Schwenkebenen wirkende Zug und/oder Druckmittel (20) vorgesehen sind, wobei die Zug und/oder Druckmittel flexibel sind.

2. Vorrichtung nach Anspruch 1, **dadurch gekennzeichnet,** daß die Schwenkebenen einen rechten Winkel einschließen.

3. Vorrichtung nach Anspruch 1 oder 2, **dadurch gekennzeichnet,** daß zumindest eine der ersten oder zweiten Lagerstellen (10, 18) auf Abstand zum jeweils zugeordneten Eintrittsende bzw. Austrittsende (6,7) angeordnet ist.

4. Vorrichtung nach einem der vorangegangenen Ansprüche, **dadurch gekennzeichnet,** daß jeweils die Betätigungseinrichtung (4) zwischen einer der Lagerstellen und dem Zug- und/oder Druckmittel (20) vorgesehen ist.

5. Vorrichtung nach einem der vorangegangenen Ansprüche, **dadurch gekennzeichnet,** daß jeweils die Betätigungseinrichtung (4) zwischen der zweiten Lagerstelle (18) und dem Zug- und/oder Druckmittel (20) vorgesehen ist.

6. Vorrichtung nach einem der vorangegangenen Ansprüche, **dadurch gekennzeichnet**, daß jeweils die Betätigungseinrichtung (4) als Kolben-Zylindereinheit (15) ausgeführt ist.

7. Vorrichtung nach einem der vorangegangenen Ansprüche, **dadurch gekennzeichnet,** daß jeweils die zweite Lagerstelle (18) mit dem Schlauch (2) verbunden ist.

8. Vorrichtung nach einem der vorangegangenen Ansprüche, **dadurch gekennzeichnet,** daß jeweils das Zug- und/oder Druckmittel (20) in der Ausgangsstellung des Schlauches (2) parallel zur Längsachse des Schlauches verläuft.

9. Vorrichtung nach einem der vorangegangenen Ansprüche, **dadurch gekennzeichnet,** daß jeweils die erste Lagerstelle (10) seitlich zur Längsachse des Schlauches (2) beabstandet angeordnet ist.

10. Vorrichtung nach einem der vorangegangenen Ansprüche und **dadurch gekennzeichnet,** daß jeweils die zweite Lagerstelle (18) seitlich zur Längsachse des Schlauches (2) beabstandet angeordnet ist.

11. Vorrichtung nach einem der vorangegangenen Ansprüche, **dadurch gekennzeichnet,** daß weitere Zug- und/oder Druckmittel (20) vorgesehen sind, wobei die Lagerstellen (10,18) jeweils am Umfang des Schlauches (2) verteilt angeordnet sind.

12. Vorrichtung nach einem der vorangegangenen Ansprüche, **dadurch gekennzeichnet,** daß jeweils zumindest zwei Zug- oder Druckmittel (20) vorgesehen sind, die zumindest in der Ausgangsstellung des Schlauches (2) einander gegenüberliegend zur Längsachse des Schlauches (2) angeordnet sind.

13. Vorrichtung nach einem der vorangegangenen Ansprüche, **dadurch gekennzeichnet,** daß drei Zug- oder Druckmittel vorgesehen sind, die in der Ausgangsstellung des Schlauches gleichmäßig um die Längsachse des Schlauches verteilt angeordnet sind und der Schlauch in mehreren Schwenkebenen schwenkbar ist.

14. Vorrichtung nach einem der vorangegangenen Ansprüche, **dadurch gekennzeichnet,** daß vier Zug- und/oder Druckmittel (20) in der Ausgangsstellung gleichmäßig um die Längsachse des Schlauches verteilt angeordnet sind, wobei die Zug- und/oder Druckmittel (20) paarweise im wesentlichen in den Schwenkebenen angeordnet sind.

15. Vorrichtung nach einem der vorangegangenen Ansprüche, **dadurch gekennzeichnet,** daß die ersten Lagerstellen jeweils an einem ersten Befestigungsring (8) angebracht sind, der den Schlauch umgibt und an diesem befestigt ist, wobei die Zug- und/oder Druckmittel (20) jeweils in den Lagerstellen (10,18) festgelegt sind.

16. Vorrichtung nach einem der vorangegangenen Ansprüche, **dadurch gekennzeichnet,** daß die zweiten Lagerstellen (18) an einem zweiten Befestigungsring (11) angebracht sind, der gegenüber dem Schlauch (2) festgelegt ist und die Betätigungseinrichtungen (4) sich jeweils am zweiten Befestigungsring (11) abstützen.

17. Vorrichtung nach einem der vorangegangenen Ansprüche, **dadurch gekennzeichnet,** daß der zweite Befestigungsring (11) Führungen (13) aufweist, in denen die Zug- und/oder Druckmittel (20) gegenüber dem Befestigungsring (8,11) beweglich geführt sind.

18. Vorrichtung nach Anspruch 17, **dadurch gekennzeichnet,** daß die Führungen (13) durch Rollen (21) verwirklicht sind, wobei die Zug- und/oder Druckmittel (20) abschnittsweise parallel zur Zug- und/oder Druckrichtung der Kolben-Zylindereinheit durch die Rollen umgelenkt sind.

19. Vorrichtung nach einem der vorangegangenen Ansprüche, **dadurch gekennzeichnet,** daß die Vorrichtung eine Rotationseinrichtung (23) aufweist, durch welche der Schlauch (2) der Zuleitung (5) um seine Symmetrieachse schwenkbar ist.

20. Vorrichtung nach einem der vorangegangenen Ansprüche, **dadurch gekennzeichnet,** daß die Zug- und/oder Druckmittel (20) in der Wandung (25) des Schlauches (2) geführt sind.

21. Vorrichtung nach einem der vorangegangenen Ansprüche, **dadurch gekennzeichnet,** daß die Zug- und/oder Druckmittel als Stahlseile ausgebildet sind.

22. Vorrichtung nach einem der vorangegangenen Ansprüche, **dadurch gekennzeichnet,** daß die Zug- und/oder Druckmittel als Zug- und Druckkräfte übertragende Gelenkstangen, vorzugsweise Kardangelenke, ausgebildet sind.

## Claims

1. A device for discharging concrete, comprising a flexible hose (2), which is connected to a concrete supply line (5), preferably a concrete supply line (5) of a concrete pump, said hose (2) being provided with an input end (6) which is associated with the supply line (5) and through which the concrete conveyed through the concrete supply line (5) enters the hose (2) and an output end (7) through which the concrete conveyed through the hose (2) leaves said hose (2) for the purpose of discharge, said hose being adapted to be bent in at least one swivelling plane between a substantially straight initial position and a curved position, and further comprising a swivelling means (3) for moving the hose (2) from its straight initial position to its curved position, said swivelling means comprising at least one drawing and/or pushing means (20) which is effective in the swivelling plane and which extends, at least at the initial position of the hose (2), outside of the longitudinal central axis of the hose (2) and at least indirectly between a first bearing (10) associated with the output end of the hose and fixedly connected to the hose (2) and a second bearing (18) associated with the input end and fixed relative to said input end at least in the drawing and/or pushing direction of the drawing and/or pushing means, and at least one actuating means being provided, which applies a drawing and/or pushing force to the drawing and/or pushing means and which is operatively connected to said drawing and/or pushing means in such a way that the distance between the first and second bearings (10, 18) can be reduced by actuating the actuating means, whereby the hose (2) can be moved from its initial position to its curved position, **characterized in that** the hose is adapted to be bent at least in two swivelling planes which are arranged at an angle relative to one another and that at least two drawing and/or pushing means (20) are provided, which are effective in the respective swivelling planes, said drawing and/or pushing means being flexible.

2. A device according to claim 1, **characterized in that** the swivelling planes include a right angle.

3. A device according to claim 1 or 2, **characterized in that** at least one of the first or second bearings (10, 18) is arranged in spaced relationship with the respective associated input end (6) or output end (7).

4. A device according to one of the preceding claims, **characterized in that** the respective actuating means (4) is provided between one of the bearings and the drawing and/or pushing means (20).

5. A device according to one of the preceding claims, **characterized in that** the respective actuating means (4) is provided between the second bearing (18) and the drawing and/or pushing means (20).

6. A device according to one of the preceding claims, **characterized in that** the respective actuating means (4) is implemented as a piston-cylinder unit (15).

7. A device according to one of the preceding claims, **characterized in that** the respective second bearing (18) is connected to the hose (2).

8. A device according to one of the preceding claims, **characterized in that** the respective drawing and/or pushing means (20) extends parallel to the longitudinal axis of the hose at the initial position of the hose.

9. A device according to one of the preceding claims, **characterized in that** the respective first bearing (10) is arranged laterally of and in spaced relationship with the longitudinal axis of the hose (2).

10. A device according to one of the preceding claims, **characterized in that** the respective second bearing (18) is arranged laterally of and in spaced relationship with the longitudinal axis of the hose (2).

11. A device according to one of the preceding claims, **characterized in that** additional drawing and/or pushing means (20) are provided, the bearings (10, 18) being arranged such that they are distributed over the circumference of the hose (2).

12. A device according to one of the preceding claims, **characterized in that** at least two drawing or pushing means (20) are provided, which, at least at the initial position of the hose (2), are arranged in opposed relationship with each other relative to the longitudinal axis of the hose (2).

13. A device according to one of the preceding claims, **characterized in that** three drawing or pushing means are provided, which, at the initial position of the hose, are arranged such that they are uniformly distributed about the longitudinal axis of the hose, and that the hose is adapted to be swivelled in several swivelling planes.

14. A device according to one of the preceding claims, **characterized in that,** at the intial position, four drawing and/or pushing means (20) are arranged such that they are uniformly distributed about the longitudinal axis of the hose, the drawing and/or pushing means (20) being arranged in pairs essentially in the swivelling planes.

15. A device according to one of the preceding claims, **characterized in that** the respective first bearings are attached to a first fastening ring (8) which surrounds the hose and which is secured thereto, the respective drawing and/or pushing means (20) being fixed in the bearings (10, 18).

16. A device according to one of the preceding claims, **characterized in that** the respective second bearings (18) are attached to a second fastening ring (11), which is fixed relative the hose (2), and that the respective actuating means (4) rest on the second fastening ring (11).

17. A device according to one of the preceding claims, **characterized in that** the second fastening ring (11) is provided with guide means (13) in which the drawing and/or pushing means (20) are guided such that they are adapted to be moved relative to the fastening ring (8, 11).

18. A device according to claim 17, **characterized in that** the guide means (13) are realized in the form of rollers (21), the drawing and/or pushing means (20) being deflected by said rollers in certain sections thereof parallel to the drawing and/or pushing direction of the piston-cylinder unit.

19. A device according to one of the preceding claims, **characterized in that** the device is provided with a rotating means (23) with the aid of which the hose (2) of the supply line (5) can be swivelled about its axis of symmetry.

20. A device according to one of the preceding claims, **characterized in that** the drawing and/or pushing means (20) are guided in the wall (25) of the hose (2).

21. A device according to one of the preceding claims, **characterized in that** the drawing and/or pushing means are implemented as steel ropes.

22. A device according to one of the preceding claims, **characterized in that** the drawing and/or pushing means are implemented as joint rods, preferably as Cardan joints, transmitting drawing and pushing forces.

## Revendications

1. Dispositif pour la distribution de béton, avec un tuyau flexible (2) raccordé à une conduite d'alimentation en béton (5) de préférence d'une pompe à béton, ledit tuyau (2) comprenant une extrémité d'entrée (6), associée à ladite conduite d'alimentation (5), par laquelle le béton convoyé par ladite conduite d'alimentation en béton (5) entre dans ledit tuyau (2), et une extrémité de sortie (7), par laquelle le béton convoyé par ledit tuyau (2) sort de ce-dernier afin d'être distribué, ledit tuyau étant flexible dans au moins un plan de pivotement entre une position de départ sensiblement rectiligne et une position courbée, et avec un moyen de pivotement (3) pour amener ledit tuyau (2) depuis sa position rectiligne de départ dans sa position courbée, ledit moyen de pivotement comprenant au moins un moyen de traction et/ou de pression (20) agissant dans ledit plan de pivotement, ledit moyen de traction et/ou de pression, au moins dans la position de départ dudit tuyau (2), s'étendant à l'extérieur de l'axe médian longitudinal dudit tuyau (2) et au moins indirectement entre un premier point d'appui (10), associé à l'extrémité de sortie dudit tuyau (2) et solidement raccordé à ce-dernier, et un second point d'appui (18), associé à l'extrémité d'entrée et fixé par rapport à ladite extrémité d'entrée au moins dans la direction de traction resp. de pression dudit moyen de traction et/ou de pression, et au moins un moyen d'actionnement, effectuant un effort de traction resp. de pression sur ledit moyen de traction et/ou de pression, étant prévu et relié de façon fonctionnelle audit moyen de traction et/ou de pression, de manière à ce qu'à chaque fois un actionnement dudit moyen d'actionnement, la distance entre lesdits premier et second points d'appui (10, 18) peut être raccourcie, ledit tuyau (2) pouvant être amené depuis sa position de départ dans sa position courbée, caractérisé en ce que ledit tuyau (2) est flexible dans au moins deux plans de pivotement disposés à un angle l'un par rapport à l'autre, et en ce qu'au moins deux moyens de traction et/ou de pression (20) agissant chacun dans lesdits plans de pivotement sont prévus, lesdits moyens de traction et/ou de pression étant flexibles.

2. Dispositif selon la revendication 1, caractérisé en ce que lesdits plans de pivotement incluent un angle droit.

3. Dispositif selon la revendication 1 ou 2, caractérisé en ce qu'au moins l'un desdits premier et seconds points d'appui (10, 18) est disposé à distance de ladite extrémité d'entrée, respectivement ladite extrémité de sortie (6, 7) associée.

4. Dispositif selon l'une quelconque des revendications précédentes, caractérisé en ce qu'à chaque fois ledit moyen d'actionnement (4) est prévu entre l'un desdits points d'appui et ledit moyen de traction et/ou de pression (20).

5. Dispositif selon l'une quelconque des revendications précédentes, caractérisé en ce qu'à chaque fois ledit moyen d'actionnement (4) est prévu entre ledit second point d'appui (18) et ledit moyen de traction et/ou de pression (20).

6. Dispositif selon l'une quelconque des revendications précédentes, caractérisé en ce qu'à chaque fois ledit moyen d'actionnement (4) est formé en tant qu'ensemble piston-cylindre (15).

7. Dispositif selon l'une quelconque des revendications précédentes, caractérisé en ce qu'à chaque fois ledit second point d'appui (18) est relié audit tuyau (2).

8. Dispositif selon l'une quelconque des revendications précédentes, caractérisé en ce qu'à chaque fois ledit moyen de traction et/ou de pression (20), dans sa position de départ du tuyau (2), s'étend en parallèle à l'axe longitudinal dudit tuyau.

9. Dispositif selon l'une quelconque des revendications précédentes, caractérisé en ce qu'à chaque fois ledit premier point d'appui (10) est disposé de façon écartée latéralement par rapport à l'axe longitudinal dudit tuyau (2).

10. Dispositif selon l'une quelconque des revendications précédentes, caractérisé en ce qu'à chaque fois ledit second point d'appui (18) est disposé de façon écartée latéralement par rapport à l'axe longitudinal dudit tuyau (2).

11. Dispositif selon l'une quelconque des revendications précédentes, caractérisé en ce que des moyens de traction et/ou de pression (20) supplémentaires sont prévus, chacun desdits points d'appui (10, 18) étant disposés de façon distribuée à la circonférence dudit tuyau (2).

12. Dispositif selon l'une quelconque des revendications précédentes, caractérisé en ce qu'à chaque fois au moins deux moyens de traction et/ou de pression (20) sont prévus, qui, au moins dans la position de départ dudit tuyau (2), sont disposés face à face par rapport à l'axe longitudinal dudit tuyau (2).

13. Dispositif selon l'une quelconque des revendications précédentes, caractérisé en ce que trois moyens de traction et/ou de pression sont prévus, qui, dans la position de départ dudit tuyau (2), sont disposés de façon répartie uniformément autour de l'axe longitudinal dudit tuyau (2) et que ledit tuyau peut être pivoté dans plusieurs plans de pivotement.

14. Dispositif selon l'une quelconque des revendications précédentes, caractérisé en ce que quatre moyens de traction et/ou de pression (20), dans la position de départ, sont disposés de façon répartie uniformément autour de l'axe longitudinal dudit tuyau, lesdits moyens de traction et/ou de pression (20) étant disposés par paires sensiblement dans les plans de pivotements.

15. Dispositif selon l'une quelconque des revendications précédentes, caractérisé en ce que lesdits premiers points d'appui sont chacun attachés à un premier anneau de fixation (8) entourant ledit tuyau et fixés à ce-dernier, lesdits moyens de traction et/ou de fixation (20) étant chacun fixés dans lesdits points d'appui (10, 18).

16. Dispositif selon l'une quelconque des revendications précédentes, caractérisé en ce que lesdits seconds points d'appui (18) sont attachés à un second anneau de fixation (11) fixé par rapport audit tuyau (2) et lesdits moyens d'actionnement (4) s'appuyent chacun contre ledit second anneau de fixation (11).

17. Dispositif selon l'une quelconque des revendications précédentes, caractérisé en ce que ledit second anneau de fixation (11) comprend des guidages (13) dans lesquels lesdits moyens de traction et/ou de pression (20) sont guidés de façon mobile par rapport audit anneau de fixation (8, 11).

18. Dispositif selon la revendication 17, caractérisé en ce que lesdits guidages (13) sont réalisés par des galets (21), lesdits moyens de traction et/ou de pression (20) étant déviés par section parallèlement à la direction de traction et/ou de pression dudit ensemble piston-cylindre.

19. Dispositif selon l'une quelconque des revendications précédentes, caractérisé en ce qu'il comprend un moyen de rotation (23) par lequel le tuyau (2) de ladite conduite d'alimentation (5) peut être pivoté autour d'un axe de symétrie.

20. Dispositif selon l'une quelconque des revendications précédentes, caractérisé en ce que lesdits moyens de traction et/ou de pression (20) sont guidés dans la paroi (25) dudit tuyau (2).

21. Dispositif selon l'une quelconque des revendications précédentes, caractérisé en ce que lesdits moyens de traction et/ou de pression sont formés en tant que câbles d'acier.

22. Dispositif selon l'une quelconque des revendications précédentes, caractérisé en ce que lesdits moyens de traction et/ou de pression sont formés en tant que tiges d'articulation, préférablement des joints de Cardan, communiquant des efforts de traction et de pression.
